# EUROPÄISCHE PATENTSCHRIFT

(11) **EP 1 235 484 B1**
(45) Veröffentlichungstag und Bekanntmachung des Hinweises auf die Patenterteilung: **07.05.2003**
(21) Anmeldenummer: 00981244.7
(22) Anmeldetag: 09.11.2000
(51) Int. Cl.: A01N 43/653

(54) **FUNGIZIDE WIRKSTOFFKOMBINATIONEN**
FUNGICIDALLY ACTIVE SUBSTANCE COMBINATIONS
COMBINAISONS D'AGENTS ACTIFS FONGICIDES

(30) Priorität: 22.11.1999 DE 19956095
(43) Veröffentlichungstag der Anmeldung: 04.09.2002
(73) Patentinhaber: Bayer CropScience AG, 40789 Monheim (DE)
(72) Erfinder: KUCK, Karl-Heinz, 40764 Langenfeld (DE); MAULER-MACHNIK, Astrid, 42799 Leichlingen (DE); WACHENDORFF-NEUMANN, Ulrike, 56566 Neuwied (DE); KRÄMER, Wolfgang, 51399 Burscheid (DE); HOLMWOOD, Graham, 42327 Wuppertal (DE)
(86) Internationale Anmeldenummer: EP0011087
(87) Internationale Veröffentlichungsnummer: WO01037666

(56) Entgegenhaltungen:
- EP-A- 0 627 163
- WO-A-96/38040
- WO-A-98/51146

## Beschreibung

Die vorliegende Erfindung betrifft neue Wirkstoffkombinationen, die aus den bekannten fungiziden Wirkstoffen Spiroxamine, Tebuconazole und Quinoxyfen bestehen und sehr gut zur Bekämpfung von phytopathogenen Pilzen geeignet sind.

Es ist bereits bekannt, dass 8-t-Butyl-2-(N-ethyl-N-n-propylamino)-methyl-1,4-dioxaspiro[5,4]decan (= Spiroxamine), 1-(4-Chlorphenyl)-4,4-dimethyl-3-(1,2,4-triazol-1-yl-methyl)-pentan-3-ol (= Tebuconazole) und 5,7-Dichlor-4-(4-fluorphenoxy)-chinolin (= Quinoxyfen) fungizide Eigenschaften besitzen (vgl. EP-A 0 281 842; EP-A 0 040 345 und EP-A 0 326 330).

Weiterhin ist schon bekannt, daß Mischungen aus
- Spiroxamine und Tebuconazole, oder
- Spiroxamine und Quinoxyfen oder
- Tebuconazole und Quinoxyfen
zur Bekämpfung von Pilzen im Pflanzenschutz eingesetzt werden können (vgl. EP-A 0 627 163 und WO 98/51 146). Sowohl die Wirksamkeit der einzelnen Komponenten als auch der bekannten Mischungen aus jeweils zwei Wirkstoffen ist gut. Bei sehr niedrigen Aurwandmengen läßt die fungizide Potenz allerdings in manchen Fällen zu wünschen übrig.

In der internationalen Patentanmeldung WO-96-38 040-A werden fungizide 3-Komponenten-Wirkstoffkombinationen beschrieben, die aus dem bekannten Spiroxamine and zwei anderer bekannten Triazol-Derivaten bestehen.

Es wurde nun gefunden, daß die neuen Wirkstoffkombinationen aus
A) 8-t-Butyl-2-(N-ethyl-N-n-propylamino)-methyl-1,4-dioxaspiro[5,4]-decan der Formel 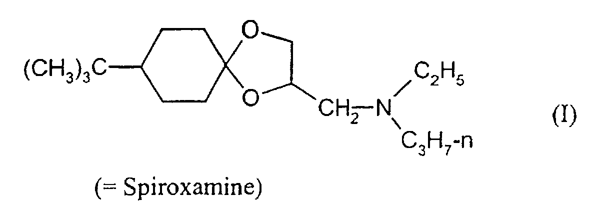 und
B) 1-(4-Chlor-phenyl)-4,4-dimethyl-3-(1,2,4-triazol-1-yl-methyl)-pentan-3-ol der Formel 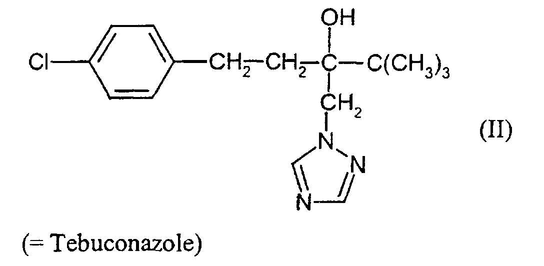 und
C) 5,7-Dichlor-4-(4-fluor-phenoxy)-chinolin der Formel 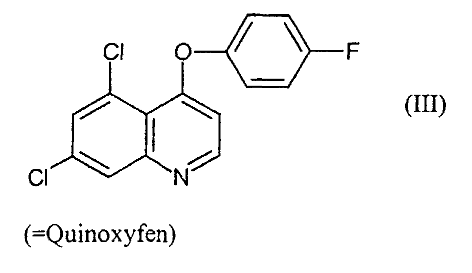 sehr gut zur Bekämpfung phytopathogener Pilze geeignet sind.

Überraschenderweise ist die Wirksamkeit der erfindungsgemäßen Kombinationen aus den drei Wirkstoffen beim Einsatz gegen phytopatogene Pilze wesentlich höher als die Wirkungen der einzelnen Komponenten bzw. die Wirkungen der vorbekannten Mischungen aus jeweils zwei Wirkstoffen. Es liegt also ein nicht vorhersehbarer, echter synergistischer Effekt vor und nicht nur eine Wirkungsergänzung.

Die in den erfindungsgemäßen Wirkstoffkombinationen enthaltenen Wirkstoffe und auch die aus diesen Komponenten möglichen Kombinationen aus jeweils zwei Wirkstoffen sind bekannt (vgl. EP-A 0 281 842, EP-A 0 040 345, EP-A 0 326 330, EP-A 0 627 163 und WO 98/51 146). Die Wirkstoffe der Formeln (II) und (III) können auch in Form von Säureadditions-Salzen eingesetzt werden.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I) 0,1 bis 1,5 Gewichtsteile, vorzugsweise 0,1 bis 1,2 Gewichtsteile an Wirkstoff der Formel (II) und 0,1 bis 1,5 Gewichtsteile, vorzugsweise 0,1 bis 1,2 Gewichtsteile an Wirkstoff der Formel (III).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen. Zur Bekämpfung von diesen Schadpilzen läßt man die erfindungsgemäßen Wirkstoffkombinationen auf die Pilze und/oder deren Lebensraum einwirken.

Die erfindungsgemäßen Wirkstoffkombinationen eignen sich besonders gut zur Bekämpfung von Getreidekrankheiten, wie Pyrenophora teres, Erysiphe graminis, Leptosphaeria nodorum, Rhynchosporium secalis, Septoria tritici, Puccinia spp., Fusarium spp. und Cochliobolus sativus.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens.

Die Wirkstoffkombinationen können in die üblichen Formulierungen überführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage. z.B. Lignin-Sulfitablaugen und Methylcellulose.

Es können in den Formulierungen Haftmittel wie Carboxy-methylcellulose, natürliche und synthetische pulverige, körnige oder latexförmige Polymere verwendet werden, wie Gummi arabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

In den Formulierungen können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen können in den Formulierungen in Mischung mit anderen bekannten Wirkstoffen vorliegen, wie Fungizide, Insektizide, Akarizide und Herbizide, sowie in Mischungen mit Düngemitteln oder Pflanzenwachstumsregulatoren.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensione, Spritzpulver, lösliche Pulver und Granulate, angewendet werden.

Die Anwendung geschieht in üblicher Weise, z.B. durch Gießen, Verspritzen, Versprühen, Verstreuen, Verstreichen, Trockenbeizen, Feuchtbeizen, Naßbeizen, Schlämmbeizen oder Inkrustieren.

Beim Einsatz der erfindungsgemäßen Wirkstoffkombinationen gegen phytopathogene Pilze können die Aufwandmengen je nach Applikationsart innerhalb eines größeren Bereiches variiert werden. Bei der Bchandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aurwandmengen an Wirkstoffkombination im allgemeinen zwischen 0,001 und 50 g pro Kilogramm Saatgut, vorzugsweise zwischen 0,01 nd 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die gute Wirkung der erfindungsgemäßen Wirkstoffkombinationen gegen phytopathogene Pilze geht aus den nachfolgenden Beispielen hervor. Während die einzelnen Wirkstoffe und auch die Kombinationen aus jeweils zwei Wirkstoffen in der fungiziden Wirkung Schwächen aufweisen, zeigen die Kombinationen aus drei Wirkstoffen eine Wirkung, die über eine einfache Wirkungssummierung und auch über die Wirkung der bekannten Kombinationen mit synergistischem Effekt hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

### Beispiel A

Puccinia-Test (Weizen) / kurativ

| | |
|---|---|
| Lösungsmittel | 25 Gewichtsteile N,N-Dimethylacetamid |
| Emulgator | 0,6 Gewichtsteile Alkylarylpolyglykolether |

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf kurative Wirksamkeit werden junge Pflanzen mit einer Kondiensuspension von Puccinia recondita besprüht. Die Pflanzen verbleiben 48 Stunden bei 20°C und 100 % relativer Luftfeuchte in einer Inkubationskabine. Anschließend werden die Pflanzen mit der Wirkstoffzubereitung in der angegebenen Aufwandmenge besprüht.

Die Pflanzen werden in einem Gewächshaus bei einer Temperatur von ca. 20°C und einer relativen Luffeuchtigkeit von ca. 80 % aufgestellt, um die Entwicklung von Rostpusteln zu begünstigen.

10 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoffe, Aurwandmengen und Versuchsergebnisse gehen aus der folgenden Tabelle hervor.

**Tabelle A**

| Puccinia-Test (Weizen) / kurativ | | |
|---|---|---|
| Wirkstoff | Aufwandmengen an Wirkstoff in g/ha | Wirkungsgrad in % |
| Bekannt: | | |
| Spiroxamine (I) | 37,5 | 38 |
| Tebuconazole (II) | 37,5 | 50 |
| Quinoxyfen (III) | 37,5 | 13 |
| (I) + (III) | 18,75 + 18,75 | 50 |
| (II) + (III) | 18,75 + 18,75 | 94 |
| Erfindungsgemäße Mischung: | | |
| (I) + (II) + (III) | 12,5 + 12,5 + 12,5 | 100 |

## Patentansprüche

1. Fungizide Mittel, **gekennzeichnet durch** einen Gehalt an einer Wirkstoffkombination, bestehend aus
A) 8-t-Butyl-2-(N-ethyl-N-n-propylamino)-methyl-1,4-dioxaspiro[5,4]-decan der Formel 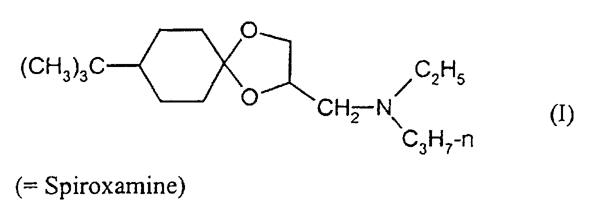 und
B) 1-(4-Chlor-phenyl)-4,4-dimethyl-3-(1,2,4-triazol-1-yl-methyl)-pentan-3-ol der Formel 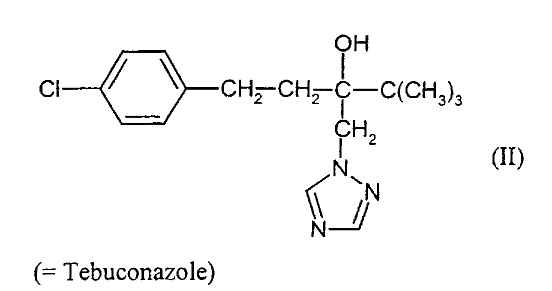 und
C) 5,7-Dichlor-4-(4-fluor-phenoxy)-chinolin der Formel 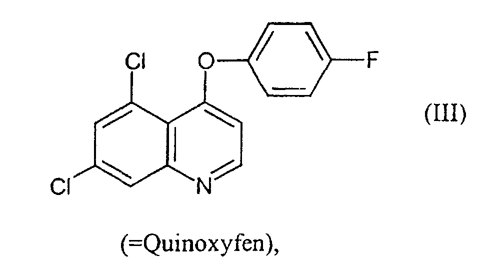 sowie **durch** einen Gehalt an Streckmitteln und/oder oberflächenaktiven Stoffen.

2. Mittel gemäß Anspruch 1, **dadurch gekennzeichnet, daß** in den Wirkstoffkombinationen das Gewichtsverhältnis von Wirkstoff der Formel (I) zu Wirkstoff der Formel (II) zwischen 1:0,1 und 1:1,5 und zu Wirkstoff der Formel (III) zwischen 1:0,1 und 1:1,5 liegt.

3. Verfahren zur Bekämpfung von phytopathogenen Pilzen, **dadurch gekennzeichnet, daß** man Wirkstoffkombinationen gemäß Anspruch 1 auf die Pilze und/oder deren Lebensraum einwirken läßt.

4. Verwendung von Wirkstoffkombinationen gemäß Anspruch 1 zur Bekämpfung von phytopathogenen Pilzen.

5. Verfahren zur Herstellung von fungiziden Mitteln, **dadurch gekennzeichnet, daß** man Wirkstoffkombinationen gemäß Anspruch 1 mit Streckmitteln und/oder oberflächenaktiven Stoffen vermischt.

## Claims

1. Fungicidal compositions, **characterized in that** they comprise an active compound combination consisting of
A) 8-t-butyl-2-(N-ethyl-N-n-propylamino)-methyl-1,4-dioxaspiro[5,4]-decane of the formula 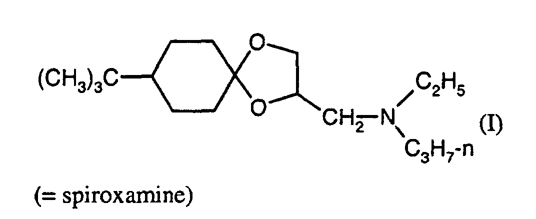 and
B) 1-(4-chloro-phenyl)-4,4-dimethyl-3-(1,2,4-triazol-1-yl-methyl)-pentan-3-ol of the formula 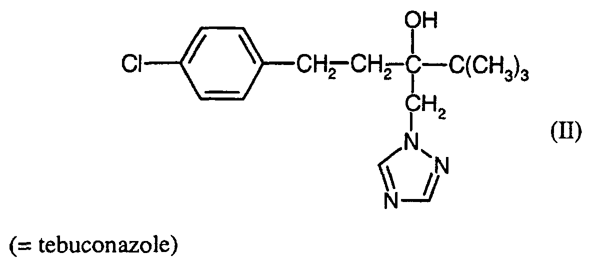 and
C) 5,7-dichloro-4-(4-fluoro-phenoxy)-quinoline of the formula 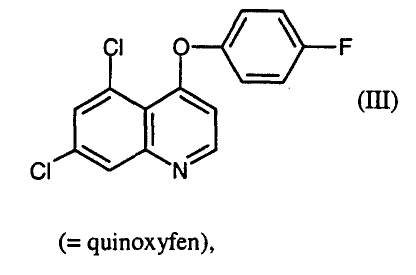 and extenders and/or surfactants.

2. Compositions according to Claim 1, **characterized in that** in the active compound combinations the weight ratio of active compound of the formula (I) to active compound of the formula (II) is between 1:0.1 and 1:1.5 and to active compound of the formula (III) is between 1:0.1 and 1:1.5.

3. Method for controlling phytopathogenic fungi, **characterized in that** active compound combinations according to Claim 1 are allowed to act on the fungi and/or their habitat.

4. Use of active compound combinations according to Claim 1 for controlling phytopathogenic fungi.

5. Process for preparing fungicidal compositions, **characterized in that** active compound combinations according to Claim 1 are mixed with extenders and/or surfactants.

## Revendications

1. Compositions fongicides, **caractérisées par** une teneur en une combinaison de substances actives constituée
A) de 8-tertio-butyl-2-(N-éthyl-N-n-propylamino)-méthyl-1,4-dioxaspiro[5,4]-décane de formule 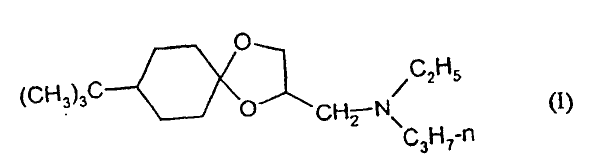 (= spiroxamine)
et
B) de 1-(4-chlorophényl)-4,4-diméthyl-3-(1,2,4-triazole-1-ylméthyl)-pentane-3-ol de formule 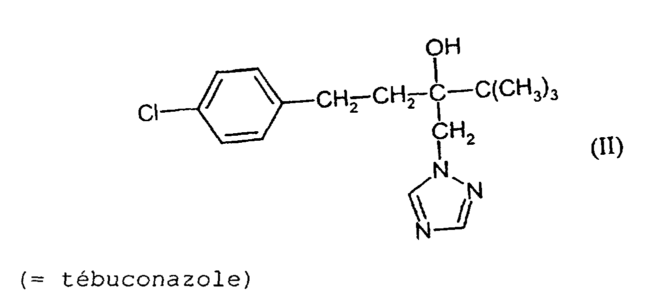 et
C) de 5,7-dichloro-4-(fluorophénoxy)-quinoléine de formule 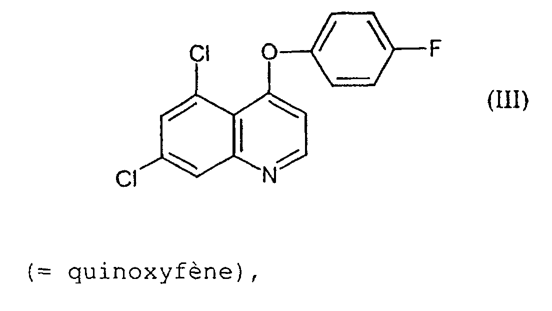 ainsi que par une teneur en diluants et/ou en agents tensio-actifs.

2. Compositions suivant la revendication 1, **caractérisées en ce que** dans les associations de substances actives, la substance active de formule (I) est dans un rapport en poids de 1:0,1 à 1:1,5 avec la substance active de formule (II) et dans un rapport en poids de 1:0,1 à 1:1,5 avec la substance active de formule (III).

3. Procédé pour combattre des champignons phytopathogènes, **caractérisé en ce qu'**on fait agir des combinaisons de substances actives suivant la revendication 1 sur les champignons et/ou sur leur milieu.

4. Utilisation de combinaisons de substances actives suivant la revendication 1 pour combattre des champignons phytopathogènes.

5. Procédé de préparation de compositions fongicides, **caractérisé en ce qu'**on mélange des combinaisons de substances actives suivant la revendication 1 avec des diluants et/ou des agents tensio-actifs.
